(19) Europäisches Patentamt / European Patent Office / Office européen des brevets

(11) **EP 3 996 008 B1**

(12) **EUROPEAN PATENT SPECIFICATION**

(45) Date of publication and mention
of the grant of the patent:
**18.03.2026 Bulletin 2026/12**

(21) Application number: **21194563.9**

(22) Date of filing: **02.09.2021**

(51) International Patent Classification (IPC):
**G06N 20/00** $^{(2019.01)}$    **G06F 1/20** $^{(2006.01)}$

(52) Cooperative Patent Classification (CPC):
**G06N 20/00**; G06F 1/206

(54) **INFORMATION PROCESSING DEVICE**

INFORMATIONSVERARBEITUNGSVORRICHTUNG

DISPOSITIF DE TRAITEMENT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2020 JP 2020185856**

(43) Date of publication of application:
**11.05.2022 Bulletin 2022/19**

(73) Proprietor: **KABUSHIKI KAISHA TOSHIBA**
**Minato-ku**
**Tokyo**
**105-0023 (JP)**

(72) Inventor: **Suzuki, Tomoyuki**
**Minato-ku, Tokyo (JP)**

(74) Representative: **Hoffmann Eitle**
**Patent- und Rechtsanwälte PartmbB**
**Arabellastraße 30**
**81925 München (DE)**

(56) References cited:
• **KATHLEEN CHAMPION ET AL: "Data-driven discovery of coordinates and governing equations", ARXIV.ORG, CORNELL UNIVERSITY LIBRARY, 201 OLIN LIBRARY CORNELL UNIVERSITY ITHACA, NY 14853, 30 March 2019 (2019-03-30), XP081164555**

• **SONG ZHIHANG ET AL: "Long-term transient thermal analysis using compact models for data center applications", INTERNATIONAL JOURNAL OF HEAT AND MASS TRANSFER, ELSEVIER, AMSTERDAM, NL, vol. 71, 28 December 2013 (2013-12-28), pages 69 - 78, XP028608796, ISSN: 0017-9310, DOI: 10.1016/ J.IJHEATMASSTRANSFER.2013.12.007**

• **HARSHA VADDIREDDY ET AL: "Feature engineering and symbolic regression methods for detecting hidden physics from sparse sensors", ARXIV.ORG, CORNELL UNIVERSITY LIBRARY, 201 OLIN LIBRARY CORNELL UNIVERSITY ITHACA, NY 14853, 13 November 2019 (2019-11-13), XP081531485**

• **BRUNTON STEVEN L. ET AL: "Discovering governing equations from data by sparse identification of nonlinear dynamical systems", PROCEEDINGS OF THE NATIONAL ACADEMY OF SCIENCES, vol. 113, no. 15, 12 April 2016 (2016-04-12), pages 3932 - 3937, XP055895143, ISSN: 0027-8424, [retrieved on 20220224], DOI: 10.1073/pnas.1517384113**

Processed by Luminess, 75001 PARIS (FR)

**Description**

FIELD

The present disclosure relates to an information processing device.

BACKGROUND

As a technique for modeling a physical phenomenon, there is a technique for acquiring a mathematical model that describes the physical phenomenon from time-series data by applying a symbolic regression problem, which is a kind of machine learning.

For example, when considering generating a thermal network model as a physical phenomenon model by using the conventional technique, because heat transfer phenomena are diverse, there is a possibility that a model of an appropriate physical phenomenon cannot be generated, for reasons that, for example, a search space is increased and the learning is not stable.

KATHLEEN CHAMPION ET AL: "Data-driven discovery of coordinates and governing equations", ARXIV.ORG, relates to a custom auto encoder to discover a coordinate transformation into a reduced space where the dynamics may be sparsely represented.

SONG ZHIHANG ET AL: "Long-term transient thermal analysis using compact models for data center applications", INTERNATIONAL JOURNAL OF HEAT AND MASS TRANSFER, ELSEVIER, relates to numerically investigations on how the thermal trends can be affected by the long-term transient flow patterns associated with leakage and how the compact models can be utilized for much faster implementations and characterizations of the transient flows.

Therefore, an object of an arrangement is to generate a model of an appropriate physical phenomenon.

SUMMARY OF THE INVENTION

The present invention is set forth in independent claim 1. Further embodiments are set forth in the dependent claims.

BRIEF DESCRIPTION OF THE DRAWINGS

FIG. 1 is a schematic diagram illustrating an example of an information processing system;
FIG. 2 is a block diagram illustrating an example of a functional configuration of an information processing device;
FIG. 3A is a diagram illustrating sub-library definition information;
FIG. 3B is a diagram illustrating generation probability information;
FIG. 4 is a diagram illustrating an example of sensor information;
FIG. 5A is a diagram illustrating a state of internal processing;
FIG. 5B is a diagram illustrating an output example of information on a linear regression equation;
FIG. 6 is a flowchart illustrating an example of flow of information processing performed by the information processing device;
FIG. 7A is a diagram illustrating an example of temperature prediction by a machine learning model without considering a physical model;
FIG. 7B is a diagram illustrating an example of temperature prediction by a machine learning model considering the physical model; and
FIG. 7C is a diagram illustrating an example of temperature prediction based on the linear regression equation generated by the present arrangement.

DETAILED DESCRIPTION

According to an arrangement, an information processing device includes a library storage unit, a detection result acquisition module, a regression equation generation module, a correction module, a regression equation regeneration module, and an output control module. The library storage unit is configured to store therein a plurality of types of sub-libraries including respective nonlinear basis functions based on a dependent variable or independent variables, and generation probabilities of the nonlinear basis functions included in the sub-libraries , the dependent variable being a temperature. The detection result acquisition module is configured to acquire a detection result of one or more sensors, wherein the sensors are configured to measure physical quantities from the electronic device, wherein the physical quantities correspond to the dependent variable and the independent variables. The regression equation generation module is configured to extract a plurality of first non-linear basis functions having a high generation probability from the sub-libraries, the generation probability being a probability of being selected from the non linear basis functions in included in a same library, each of the first non-linear basis functions corresponding to one of the sub-libraries, generate a plurality of linear regression equations, in which the nonlinear basis functions of the plurality of types of sub-libraries are combined, for calculating the dependent variable using the detection result, estimate coefficients of the linear regression equations by by sparse estimation, and calculate loss functions of the linear regression equations by using a result of the calculation, the sparse estimation estimating the coefficients such that values of part of the coefficients are each zero according to a result of a comparison to a hyperparameter of the sparse estimation. The correction module is configured to correct the generation probabilities and a hyperparameter of the machine learning on a basis of the loss functions of the linear regression equations when a predetermined condition is not met, the hyperparameter being corrected such that a value is added when the loss functions fall below a threshold value and a value is subtracted when the loss functions are equal to or more than the threshold value. The regression equation regeneration module is configured to extract nonlinear basis functions on a basis of the corrected generation probabilities from the sub-libraries including the nonlinear basis functions, generate linear regression equations, in which the nonlinear basis functions of the plurality of types of sub-libraries are combined, estimate coefficients of the linear regression equations by sparse estimation using the corrected hyperparameter, and calculate loss functions of the linear regression equations. The output control module is configured to output, to an output unit, a linear regression equation selected from the linear regression equations generated by the regression equation generation module or the regression equation regeneration module when the condition is met, wherein the plurality of types of sub-libraries includes two or more of a heat-conduction sub-library, a radiation sub-library, a forced convection sub-library, a natural convection sub-library, and a heat generation sub-library; and the linear regression equation is an equation used for predicting a temperature of the electronic apparatus, based on the information acquired from a sensor.

Hereinafter, an information processing device according to an arrangement will be described in detail with reference to the accompanying drawings. The present disclosure is not limited to the arrangement.

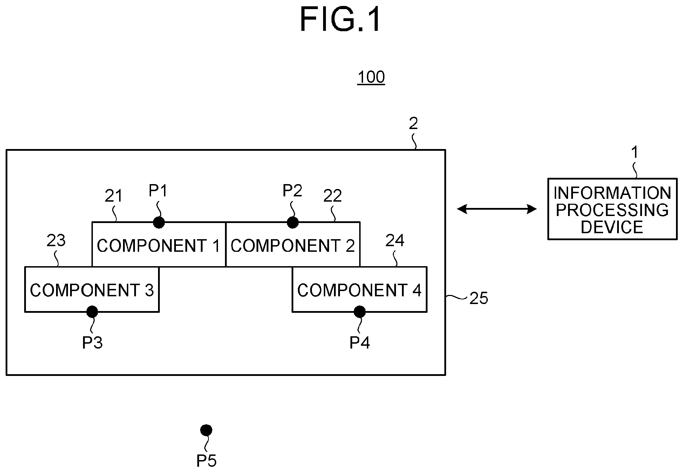

FIG. 1 is a schematic diagram illustrating an example of an information processing system 100.

The information processing system 100 includes an information processing device 1 and an electronic apparatus 2. The information processing device 1 and the electronic apparatus 2 are connected to be able to exchange data or signals.

The electronic apparatus 2 is equipment including one or a plurality of components and driven by supplied electric power. The electronic apparatus 2 is applied to, for example, various apparatuses in which one or a plurality of electronic components are mounted in one rack. Specifically, the electronic apparatus 2 is applied to various electronic apparatuses such as a digital broadcasting transmitter, a data relay apparatus, a computer, and a server.

The electronic apparatus 2 includes a housing 25 for housing various components and the like.

The housing 25 is a main body portion of the electronic apparatus 2, and is an exterior for housing various components and devices. In the present arrangement, a case where the housing 25 is a box-like member having a hollow inside will be described as an example.

A plurality of components and a plurality of sensors are arranged in the housing 25. In the present arrangement, an arrangement in which the components and the sensors are arranged in the housing 25 will be described as an example.

A component 21 and a component 22 are electronic components. The electronic component is, for example, a component that is driven according to the supplied electric power. The electronic components include heat-generating components that generate heat when driven according to the supplied electric power. Note that "drive" includes both an electric drive and a mechanical drive. The electric drive includes, for example, processing by a processor such as a central processing unit (CPU). The mechanical drive includes, for example, drive of a motor. Note that the component 21 and the component 22 are heat-generating components.

The component 21 and the component 22 serving as heat generating components are, for example, processors such as the CPU and a graphics processing unit (GPU). Note that the component 21 and the component 22 may be any desired component that generates heat by being driven according to the supplied electric power, and are not limited to the CPU and the GPU. For example, the component 21 and the component 22 may be a field effect transistor (FET), an intelligent power module (IPM), the motor, an electronic circuit, and the like.

A component 23 and a component 24 are metal blocks such as aluminum. The component 23 and the component 24 have a cooling function.

The sensors are arranged in the electronic apparatus 2. The sensors measure, for example, physical quantities of environmental changes at positions P1 to P5. For example, the sensors detect the physical quantities of temperature, current, voltage, and wind speed at the positions P1 to P5, and output detection results as detection values. The physical quantity and the detected value are represented by numerical values indicating, for example, temperature, current, voltage, wind speed, and the like. Note that pressure, rotation speed of an air cooling fan, and the like may be included.

The sensors described above are, for example, a temperature sensor, a flow rate sensor, a current sensor, a voltage sensor, and the like.

The sensors may be arranged at positions inside the housing 25 or outside the housing 25 where the environmental changes can be measured. The sensors may be built in as a product or may be externally attached only at the time of measurement.

The information processing device 1 is an apparatus that generates a model for predicting the temperature of the electronic apparatus on the basis of a state of the electronic apparatus 2. The information processing device 1 and each of the sensors provided in the electronic apparatus 2 are connected to be able to exchange data or signals. Note that the information processing device 1 may be further connected to an electronic apparatus including various information processing devices other than the sensor mounted on the electronic apparatus 2 so that data or signals can be exchanged. For example, the information processing device 1 may be connected to the sensors and at least one of the components so that data or signals can be exchanged. Furthermore, the information processing device 1 is, for example, a server, a workstation, or the like.

For example, the information processing device 1 may collectively transmit data acquired from the sensors to a remote information processing device by a storage medium or a cloud.

Next, an example of a functional configuration of the information processing device 1 will be described.

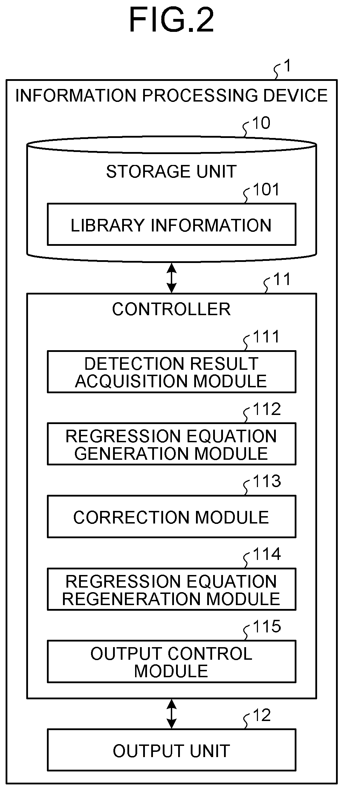

FIG. 2 is a block diagram illustrating the example of the functional configuration of the information processing device 1.

The information processing device 1 and the sensors are connected so that data or signals can be exchanged. Note that, as described above, the information processing device 1 may be connected to various kinds of electronic apparatus other than the sensors so that data or signals can be exchanged. The information processing device 1 of the present arrangement is an apparatus that generates a model based on a thermal network method. The information processing device 1 outputs a linear regression equation capable of outputting the temperature of the electronic apparatus 2, as the model.

The information processing device 1 includes a storage unit 10, a controller 11, and an output unit 12. The controller 11 is connected to the storage unit 10 and the output unit 12 so that data or signals can be exchanged.

The storage unit 10 stores therein various types of data. The storage unit 10 is, for example, a storage medium such as a known hard disk drive (HDD). In the present arrangement, the storage unit 10 stores therein library information 101 in advance.

The library information 101 is information including sub-library definition information that is information in which a plurality of types of sub-libraries including nonlinear basis functions are defined, and generation probability information that is information on generation probability of each of the nonlinear basis functions included in each sub-library.

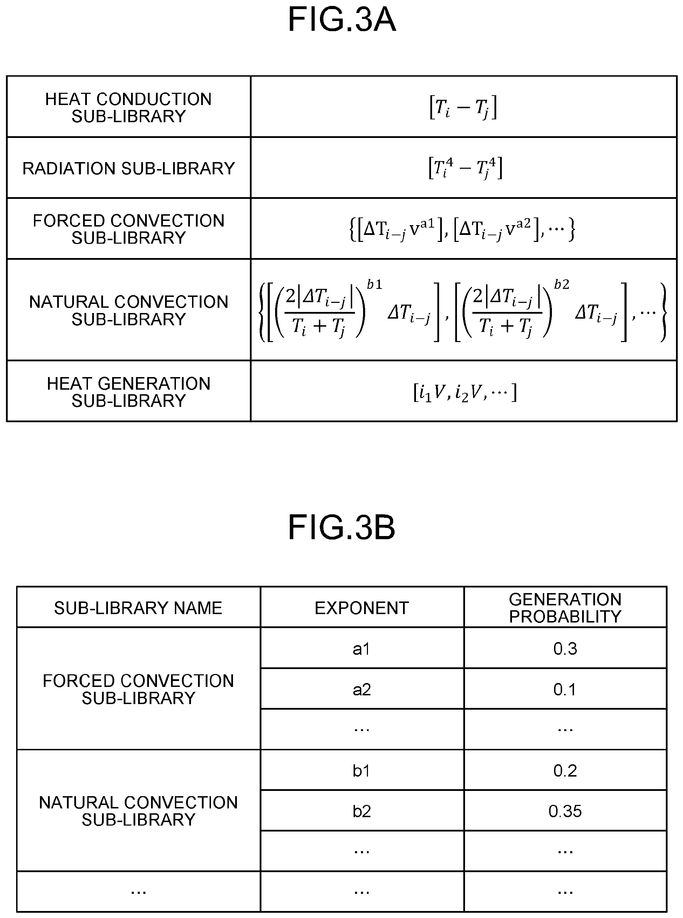

First, the sub-library will be described with reference to FIG. 3A. Each sub-library is a sub-library for generating linear regression equation that represents a thermal model. FIG. 3A is a diagram illustrating sub-library definition information. As illustrated in FIG. 3A, the sub-libraries include a heat conduction sub-library, a radiation sub-library, a forced convection sub-library, a natural convection sub-library, and a heat generation sub-library. Each sub-library includes one or a plurality of nonlinear basis functions. Note that the sub-library is not limited to one illustrated in FIG. 3A, and a phase-change sub-library that considers a phase change may be defined.

Ti and Tj illustrated in FIG. 3A are temperatures at any of the positions P1 to P5. Furthermore, $\Delta T$ and $\Delta T_{i-j}$ are temperature differences between two points. V is a velocity (wind speed). V is a voltage. $i_1$ and $i_2$ are currents. Thus, the sub-libraries include nonlinear basis functions based on a dependent variable (temperature) and independent variables (velocity, current and voltage).

As illustrated in FIG. 3A, each sub-library contains one or more nonlinear basis functions. Furthermore, the forced convection sub-library and the natural convection sub-library include the nonlinear basis functions having different exponents.

In the above thermal model, an energy conservation law that holds for a node (temperature measurement point) is expressed by a node equation illustrated in the following equation (1).

$$\sum_{\substack{j=1 \\ j \neq i}}^{N} \frac{1}{R_{ij}^{(m)}} \left( T_i^{(m)} - T_j^{(m)} \right) = Q_i^{(m)} - \frac{C_i^{(m)}}{\Delta t} \left( T_i^{(m)} - T_i^{(m-1)} \right) \tag{1}$$

In the above equation (1), R is thermal resistance, T is temperature, Q is calorific value, and $\Delta t$ is time interval. Furthermore, m is a subscript of time.

When the above equation (1) is transformed, the following equation (2) is obtained.

$$\frac{1}{\Delta t}\left(T_i^{(m)} - T_i^{(m-1)}\right) = \frac{\partial T}{\partial t}$$

$$= \frac{1}{C_i^{(m)}}\left\{Q_i^{(m)} - \sum_{\substack{j=1 \\ j\neq i}}^{N} \frac{1}{R_{ij}^{(m)}}\left(T_i^{(m)} - T_j^{(m)}\right)\right\} \qquad (2)$$

As shown by the right side of the equation (2), if a nonlinear basis function indicating Q/C and $\Delta T/RC$ can be prepared, an appropriate linear regression equation can be derived. When dimensions and physical properties do not change, such as in maintenance operations, the nonlinear basis functions of the heat conduction sub-library, the radiation sub-library, the forced convection sub-library, and the natural convection sub-library are proportional to $\Delta T/RC$. Furthermore, the heat generation sub-library is proportional to Q/C. The information processing device 1 of the present arrangement generates the linear regression equation according to the thermal model by using the sub-libraries defined in the sub-library definition information.

The library information 101 further includes the information on the generation probability, which is a probability of being selected from the nonlinear basis functions included in the same sub-library.

Subsequently, the generation probability will be described with reference to FIG. 3B. FIG. 3B is a diagram illustrating the generation probability information. As illustrated in FIG. 3B, the sub-library, the exponent, and the generation probability are associated with each other.

Returning to FIG. 2, the output unit 12 outputs various information. In the present arrangement, the output unit 12 outputs information on the model for predicting the temperature of the electronic apparatus. Details of the information on the model for predicting the temperature of the electronic apparatus will be described later.

The output unit 12 includes at least one of a display function for displaying various information and a communication function for communicating data with an external apparatus. The external apparatus is an apparatus provided outside the electronic apparatus 2. The electronic apparatus 2 and the external apparatus may be able to communicate with each other via a network or the like. For example, the output unit 12 is configured by combining at least one of a known display device and a known communication device.

Next, a controller 30 will be described.

The controller 30 includes a detection result acquisition module 111, a regression equation generation module 112, a correction module 113, a regression equation regeneration module 114, and an output control module 115.

The detection result acquisition module 111, the regression equation generation module 112, the correction module 113, the regression equation regeneration module 114, and the output control module 115 are implemented by, for example, one or a plurality of processors. For example, each of the above components may be implemented by causing the processor such as the CPU to execute a computer program, that is, by software. Each of the above components may be implemented by the processor such as a dedicated IC, that is, by hardware. Each of the above components may be implemented by using software and hardware in combination. When the processors are used, each processor may implement one of the components, or may implement two or more of the components.

The detection result acquisition module 111 acquires the detection results detected by the sensors. For example, the detection result acquisition module 111 acquires the detection results of measuring at predetermined time intervals the temperatures at the positions P1 to P5, the wind speed at the position P5, the currents at the positions P1 and P2, and the voltage at the position P1 illustrated in FIG. 1. Note that the detection result acquisition module 111 may acquire information on the rotation speed and voltage of the air cooling fan, and calculate the wind speed on the basis of the information.

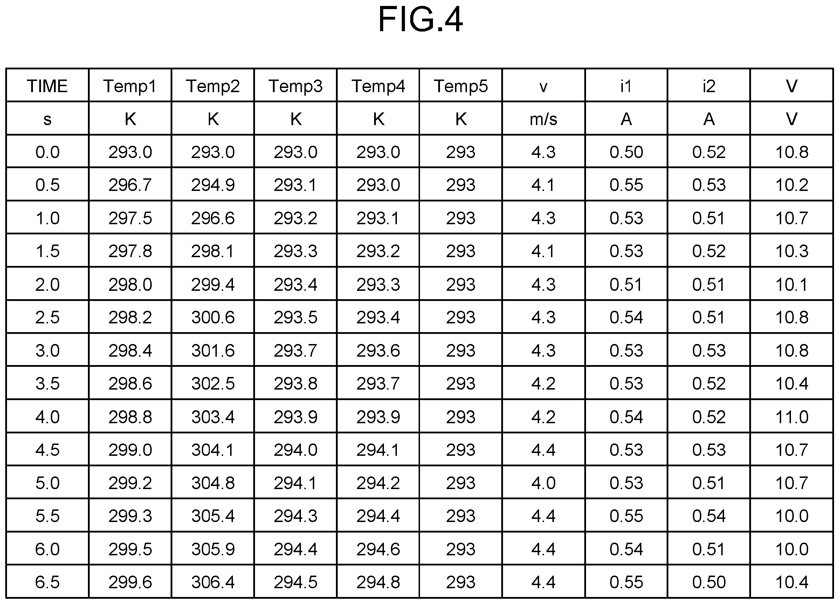

Here, an example of data acquired by the detection result acquisition module 111 is illustrated in FIG. 4. FIG. 4 is a diagram illustrating an example of sensor information. As illustrated in FIG. 4, for example, the data measured every 0.5 seconds is acquired. Temp1 to Temp5 illustrated in FIG. 4 are the temperatures at the positions P1 to P5. V illustrated in FIG. 4 is the wind speed at the position P5. $i_1$ and $i_2$ are the currents at the positions P1 and P2. V illustrated in FIG. 4 is the voltage at the position P1. Note that the detection result acquisition module 111 may register the acquired detection result in the storage unit 10.

Returning to FIG. 2, the regression equation generation module 112 generates a plurality of regression equations. Specifically, the regression equation generation module 112 first differentiates each of Temp1 to Temp5 acquired at the corresponding time, by time. Furthermore, the regression equation generation module 112 generates matrix data in which each piece of data acquired by the detection result acquisition module 111 is input to the nonlinear basis function in each sub-library. In this way, the regression equation generation module 112 calculates using the detection result of the sensor and the nonlinear basis functions.

Subsequently, the regression equation generation module 112 extracts nonlinear basis functions from the sub-libraries including the nonlinear basis functions on the basis of the generation probabilities, and generates the linear regression equations for calculating each of Temp1 to Temp5 by combining the nonlinear basis functions of the plurality of types of sub-libraries.

When extracting a nonlinear basis function from the sub-library including the nonlinear basis functions on the basis of the generation probability, the regression equation generation module 112 preferentially extracts the exponent having a high generation probability of the generation probability information.

Subsequently, the regression equation generation module 112 determines coefficients of the linear regression equations by sparse estimation of a known technique. For example, the regression equation generation module 112 determines the coefficients by the least squares method, and then sets the coefficient equal to or less than a predetermined threshold value (hyperparameter) to 0. Furthermore, the regression equation generation module 112 updates the coefficient by performing the least squares method again with a candidate function (nonlinear basis function) having the remaining non-zero coefficient, and sets the coefficient equal to or less than the predetermined threshold value to 0. Note that the regression equation generation module 112 repeats a plurality of times a process of updating the coefficient by performing the least squares method again with the candidate function and of setting the coefficient equal to or less than the threshold value to 0.

Note that the regression equation generation module 112 may determine a coefficient by other known machine learning in addition to determining the coefficients by sparse estimation.

Furthermore, the regression equation generation module 112 calculates loss functions using the linear regression equations and a result of the above calculation. A method for calculating the loss functions is implement by a known method. For example, the regression equation generation module 112 generates the loss functions based on an error between a result of inputting the matrix data, which is obtained by inputting each piece of data acquired by the detection result acquisition module 111 to the nonlinear basis function in each sub-library, to the generated linear regression equations, and a result of differentiating each of Temp1 to Temp5 at the corresponding time, by time. Note that the regression equation generation module 112 may calculate the loss functions based on not only the above-described error but also a degree of simplicity of the equation.

If conditions described later are not met, the correction module 113 corrects the hyperparameter and the generation probabilities used when determining the coefficients of the linear regression equations on the basis of the loss functions of the linear regression equations. The method for correcting the hyperparameter may be a method of the related art (for example, a method described in S. L. Brunton, J. L. Proctor, J. N. Kutz, "Discovering governing equations from data by sparse identification of nonlinear dynamical systems", Proc. Natl. Acad. Sci., 113 (2016), pp. 3932-3937). The correction module 113 adds a value to the hyperparameter when the loss function of each linear regression equation falls below a predetermined threshold value. In contrast, the correction module 113 subtracts a value from the hyperparameter when the loss function of each linear regression equation is equal to or more than the threshold value.

The correction module 113 increases the generation probability of the sub-library that constitutes the linear regression equation of the smallest loss function among the loss functions of the linear regression equations generated by the same hyperparameter, and reduces the generation probability of other sub-libraries. Note that as a method for correcting the generation probability, for example, the generation probability of the sub-library having a high generation probability may be further increased. That is, the generation probability may be corrected so as to narrow down the nonlinear basis function to be extracted.

The regression equation regeneration module 114 extracts nonlinear basis functions from the sub-libraries including the nonlinear basis functions on the basis of the generation probabilities after correction by the correction module 113, generates linear regression equations obtained by combining the nonlinear functions of the plurality of types of sub-libraries, estimates coefficients of the linear regression equations by sparse estimation using the hyperparameter corrected by the correction module 113, and calculates loss functions of the linear regression equations.

If the regression equation regeneration module 114 has not generated the linear regression equation for a predetermined number of times, the correction module 113 corrects the hyperparameter and the generation probabilities again. Then, the regression equation regeneration module 114 calculates the loss functions of the linear regression equations on the basis of the hyperparameter and the generation probabilities that have been corrected again. In this way, the controller 11 corrects the hyperparameter and the generation probabilities for the predetermined number of times, and calculates the loss functions using the hyperparameter and the generation probabilities that have been corrected.

The output control module 115 outputs a linear regression equation selected from the linear regression equations to the output unit 12 if a predetermined condition is met. Examples of this condition include the number of times the regression equation regeneration module 114 has generated the linear regression equations. Furthermore, the above condition may be that the loss functions of the linear regression equations calculated by the regression equation generation module 112 or the loss functions of the linear regression equations calculated by the regression equation regeneration module 114 is equal to or less than the threshold value.

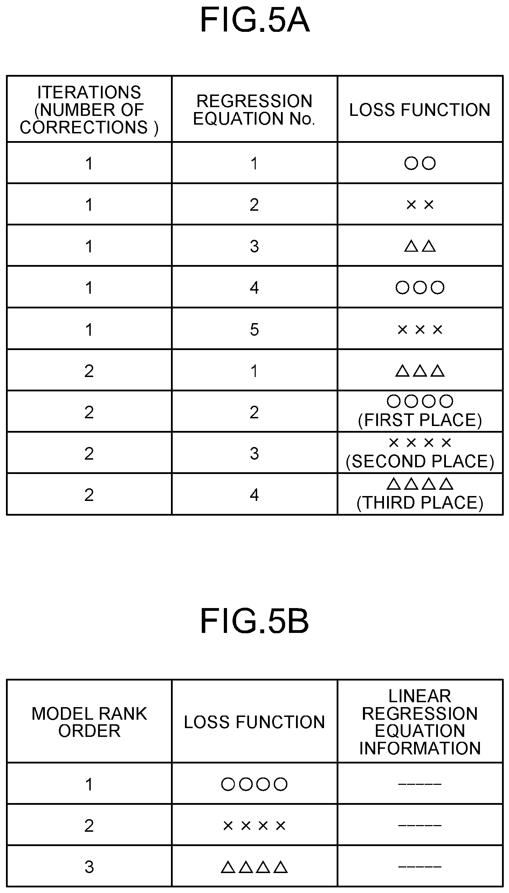

Furthermore, the output control module 115 outputs information on the linear regression equations selected by a rank order based on the loss functions of the linear regression equations to the output unit. Here, an example in which the output control module 115 outputs the linear regression equations will be described with reference to FIGS. 5A and 5B.

FIG. 5A is a diagram illustrating a state of internal processing. Specifically, FIG. 5A is a diagram in which the number of iterations (number of corrections) for the linear regression equations generated by the regression equation regeneration module 114, a regression equation No. indicating an identification number of the linear regression equation, and the loss function are associated with each other.

As illustrated in FIG. 5A, the loss function "○○○○" of the linear regression equation in which "the number of iterations" is "2" and the "regression equation No." is "2" is the first place (a value indicated by the loss function is the smallest), the loss function "××××" of the linear regression equation in which "the number of iterations" is "2" and the "regression equation No." is "3" is the second place, and the loss function "△△△△" of the linear regression equation in which "the number of iterations" is "2" and the "regression equation No." is "4" is the third place.

FIG. 5B is a diagram illustrating an output example of the information on the linear regression equation. The output control module 115 outputs the loss function and linear regression equation information to the output unit 12 on the basis of the rank order of the loss function illustrated in FIG. 5A. Here, the linear regression equation information is information indicating the linear regression equation, such as information indicating a simultaneous equation of nodes and a linear combination of the basis functions. Note that the output control module 115 may output the linear regression equation information on a separate screen.

Note that the output control module 115 may select the linear regression equation having the smallest loss function among the linear regression equations.

Note that the output control module 115 may transmit and output the selected linear regression equation to another information processing device. Thus, the other information processing device can perform temperature prediction calculation using the linear regression equation.

Next, a flow of information processing performed by the information processing device 1 will be described.

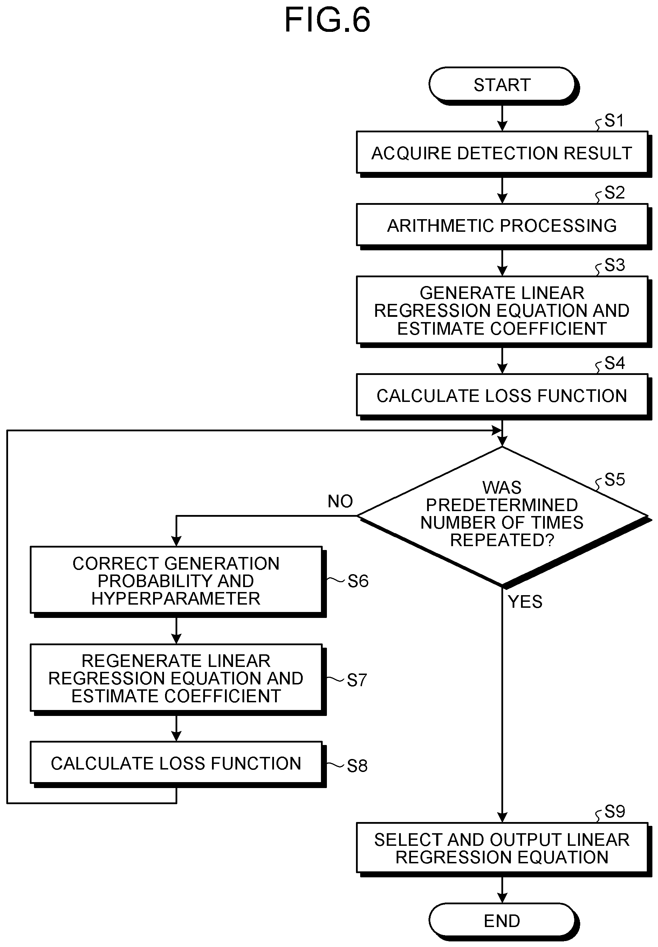

FIG. 6 is a flowchart illustrating an example of the flow of the information processing performed by the information processing device 1.

The detection result acquisition module 111 acquires the detection results of the sensors (Step S1). Subsequently, the regression equation generation module 112 uses the detection results of the sensors to differentiate each of Temp1 to Temp5 acquired at the corresponding time, by time, and to generate the matrix data in which each piece of data acquired by the detection result acquisition module 111 is input to the nonlinear basis function in each sub-library. In this way, the regression equation generation module 112 performs arithmetic processing of the nonlinear basis function using the detection results of the sensors (Step S2).

The regression equation generation module 112 extracts the nonlinear basis function from the sub-library including the nonlinear basis functions on the basis of the generation probability, and generates the linear regression equations for calculating each of Temp1 to Temp5 by combining the nonlinear basis functions of the plurality of types of sub-libraries. Furthermore, the regression equation generation module 112 determines the coefficients of the linear regression equations by sparse estimation (Step S3).

The regression equation generation module 112 calculates the loss function using the linear regression equations and the result of the above calculation (Step S4). If the linear regression equation has not been generated for the predetermined number of times (No at Step S5), the correction module 113 corrects the generation probability and the hyperparameter on the basis of the loss function of the linear regression equation (Step S6). For example, the correction module 113 adds a value to the hyperparameter when the loss function of each linear regression equation falls below the predetermined threshold value. The correction module 113 increases the generation probability of the sub-library that constitutes the linear regression equation of the smallest loss function among the loss functions of the linear regression equations generated by the same hyperparameter, and reduces the generation probability of the other sub-libraries.

The regression equation regeneration module 114 extracts the nonlinear basis function from the sub-library including the nonlinear basis functions on the basis of the generation probability after correction by the correction module 113, generates the linear regression equations combining the nonlinear functions of the plurality of types of sub-libraries, and estimates the coefficients of the linear regression equations by sparse estimation using the hyperparameter corrected by the correction module 113 (Step S7). Furthermore, the regression equation regeneration module 114 calculates the loss functions of the linear regression equations (Step S8), and proceeds to Step S5.

In Step S5, when the regression equation regeneration module 114 generates the linear regression equation for the predetermined number of times, the output control module 115 outputs the linear regression equation selected from the linear regression equations to the output unit 12 (Step S9). Then, this routine is terminated.

As described above, the information processing device 1 of the present arrangement includes the storage unit 10 for storing the library information, the detection result acquisition module 111, the regression equation generation module 112, the correction module 113, and the regression equation regeneration module 114, and the output control module 115.

The storage unit 10 stores therein the library information 101 including the sub-library definition information that is the information on the plurality of types of sub-libraries including nonlinear basis functions based on the dependent variable or the independent variables, and the generation probability information that is the information on the generation probability of each of the nonlinear basis functions included in each sub-library.

The detection result acquisition module 111 acquires the detection results of the sensors. The regression equation generation module 112 calculates the non-linear base function of the sub-library using the detection results, extracts the nonlinear basis function from the sub-library including the nonlinear basis functions on the basis of the generation probability, generates the linear regression equations combining the nonlinear basis functions of the plurality of types of sub-libraries, estimates the coefficients of the linear regression equations by machine learning, and calculates the loss functions of the linear regression equations using the calculated result.

The correction module 113 corrects the generation probability and the hyperparameter of machine learning on the basis of the loss function of the linear regression equation. The regression equation regeneration module 114 extracts the nonlinear basis function from the sub-library including the nonlinear basis functions on the basis of the corrected generation probability, generates the linear regression equations combining the nonlinear basis functions of the plurality of types of sub-libraries, estimates the coefficients of the linear regression equations by machine learning using the corrected hyperparameter, and calculates the loss functions of the linear regression equations.

The output control module 115 outputs the linear regression equation selected from the linear regression equations to the output unit 12 if the predetermined condition is met.

In this way, the information processing device 1 extracts the nonlinear basis function from the sub-library including the nonlinear basis functions on the basis of the generation probability, generates the linear regression equations combining the nonlinear basis functions of the plurality of types of sub-libraries, and regenerates the linear regression equation while tuning the generation probability and the hyperparameter of machine learning until the predetermined condition is met.

In this case, the information processing device 1 regenerates the linear regression equation while tuning the generation probability and the hyperparameter of machine learning, and narrows down the linear regression equation to be generated by changing the generation probability. As a result, the information processing device 1 can output an appropriate linear regression equation while reducing a search space. That is, the information processing device 1 can generate a model of an appropriate physical phenomenon.

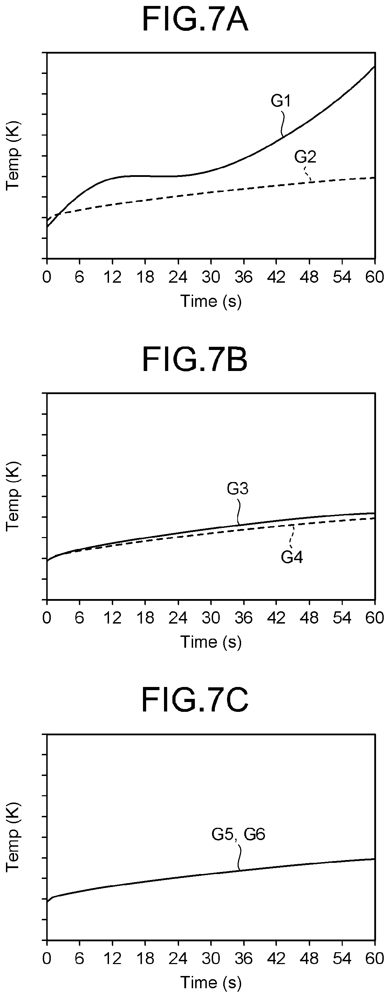

Here, an example of predicting the temperature on the basis of the information acquired from the sensor will be described with reference to graphs of FIGS. 7A to 7C. FIG. 7A is a diagram illustrating an example of temperature prediction by machine learning without considering a physical model. FIG. 7A includes a graph G1 and a graph G2. The graph G1 is a prediction graph of a temperature Temp1 predicted by a result of deep learning with the measurement data by the sensor. The graph G2 is a graph of correct answer data of the temperature Temp1. The vertical axis is temperature and the horizontal axis is time. As illustrated in FIG. 7A, there is a difference between the prediction graph and the graph of the correct answer data.

FIG. 7B is a diagram illustrating an example of temperature prediction by a machine learning model considering a known physical model. FIG. 7B includes a graph G3 and a graph G4. The graph G3, although not including a sub-library as in the present arrangement, is a graph predicting the temperature Temp1 on the basis of the physical model. The graph G4 is the graph of the correct answer data of the temperature Temp1. As illustrated in FIG. 7B, there is a difference between the prediction graph and the graph of the correct answer data, although not as much as in FIG. 7A. Furthermore, as illustrated in FIG. 7B, the difference increases with the passage of time, indicating that it is not suitable for long-term prediction.

FIG. 7C is a diagram illustrating an example of temperature prediction based on the linear regression equation generated by the present arrangement. FIG. 7C includes a graph G5 and a graph G6. The graph G5 is a graph predicting the temperature Temp1 on the basis of the sub-library as in the present arrangement. The graph G6 is the graph of the correct answer data of the temperature Temp1. As illustrated in FIG. 7C, the prediction graph and the graph of the correct answer data are almost the same. As described above, the information processing device 1 of the present arrangement can output the linear regression equation that can be predicted more appropriately by generating the linear regression equation using the sub-library.

The information processing device 1 estimates the coefficients of the linear regression equations by sparse estimation. The linear regression equation includes many basis functions, most of which have zero coefficients, and thus the coefficients can be appropriately estimated by using sparse estimation.

The information processing device 1 generates the linear regression equation that is an equation for calculating the temperature using the temperature as the dependent variable. In order to calculate the temperature, since there are wide variety of heat transfer phenomena, the search space tends to be increased, however, the library information 101 as described above is stored, and the linear regression equation is generated/regenerated using the library information 101, so that an appropriate model of a thermal phenomenon can be generated.

The information processing device 1 stores therein the plurality of types of sub-libraries including the nonlinear basis functions of independent variables corresponding to velocity, current and voltage. In this way, the information processing device 1 stores therein the nonlinear basis functions related to velocity, current and voltage that are highly related to temperature, and generates the linear regression equation using the nonlinear basis functions, so that the appropriate model of the thermal phenomenon can be generated.

Since the information processing device 1 stores therein, as the plurality of types of sub-libraries, the nonlinear basis functions of the heat conduction sub-library, the radiation sub-library, the forced convection sub-library, the natural convection sub-library, and the heat generation sub-library, the information processing device 1 stores therein the sub-library corresponding to the node equation, so that the appropriate model of the thermal phenomenon can be generated.

The output control module 115 of the information processing device 1 outputs the information on the selected linear regression equations to the output unit 12 according to the rank order based on the loss function of each of the linear regression equations. In this way, the information processing device 1 can output the information on the linear regression equations selected according to the rank order based on the loss function, thereby outputting pieces of information that can be compared and examined by a user of the information processing device 1.

In the above-described arrangement, while a case where the information processing device 1 generates the linear regression equation of the thermal model has been described, the linear regression equation of a model of another physical phenomenon (for example, electric resistance or physical deformation amount) may be generated, according to unclaimed embodiments.

While certain arrangements have been described, these arrangements have been presented by way of example only, and are not intended to limit the scope of the claims.

## Claims

1. An information processing device (1) comprising:

    a library storage unit (10) configured to store therein a plurality of types of sub-libraries including respective nonlinear basis functions based on a dependent variable or independent variables, and generation probabilities of the nonlinear basis functions included in the sub-libraries, the dependent variable being a temperature of an electronic apparatus;
    a detection result acquisition module (111) configured to acquire a detection result of sensors, wherein the sensors are configured to measure physical quantities from the electronic device, wherein the physical quantities correspond to the dependent variable and the independent variables;
    a regression equation generation module (112) configured to extract a plurality of first nonlinear basis functions having a high generation probability from the sub-libraries, the generation probability being a probability of being selected from the nonlinear basis functions included in a same sub-library, each of the first nonlinear basis functions corresponding to one of the sub-libraries, generate a plurality of linear regression equations, in which the first nonlinear basis functions are combined, for calculating the dependent variable using the detection result, estimate coefficients of the linear regression equations by sparse estimation, and calculate loss functions of the linear regression equations by using a result of the calculation, the sparse estimation estimating the coefficients such that values of part of the coefficients are each zero according to a result of a comparison to a hyperparameter of the sparse estimation;
    a correction module (113) configured to correct the generation probabilities and the hyperparameter on a basis of the loss functions of the linear regression equations when a predetermined condition is not met, the hyperparameter being corrected such that a value is added when the loss functions fall below a threshold value and a value is subtracted when the loss functions are equal to or more than the threshold value;
    a regression equation regeneration module (114) configured to extract the first nonlinear basis functions on a basis of the corrected generation probabilities from the sub-libraries, generate linear regression equations, in which the first nonlinear basis functions are combined, estimate coefficients of the linear regression equations by the sparse estimation using the corrected hyperparameter, and calculate loss functions of the linear regression equations; and
    an output control module (115) configured to output, to an output unit (12), a linear regression equation selected from the linear regression equations generated by the regression equation generation module or the regression equation regeneration module when the condition is met, wherein
    the plurality of types of sub-libraries includes two or more of a heat conduction sub-library, a radiation sub-library, a forced convection sub-library, a natural convection sub-library, and a heat generation sub-library; and
    the linear regression equation is an equation used for calculating a temperature of the electronic apparatus, based on a detection result acquired by one of the sensors.

2. The information processing device (1) according to claim 1, wherein the independent variable includes variables corresponding to velocity, current, and voltage.

3. The information processing device (1) according to claim 1, wherein the output control module (115) is configured to output, to the output unit (12), information on linear regression equations selected according to a rank order based on the loss functions of the linear regression equations.

**Patentansprüche**

1.  Informationsverarbeitungsvorrichtung (1), umfassend:

    eine Speichereinheit (10), die konfiguriert ist zum Speichern einer Vielzahl von Arten von Unterbibliotheken, die jeweilige nichtlineare Basisfunktionen auf Grundlage einer abhängigen Variablen oder unabhängiger Variablen und Erzeugungswahrscheinlichkeiten der nichtlinearen Basisfunktionen enthalten, die in den Unterbibliotheken enthalten sind, wobei die abhängige Variable eine Temperatur einer elektronischen Vorrichtung ist;
    ein Detektionsergebnis-Erfassungsmodul (111), das konfiguriert ist zum Erfassen eines Detektionsergebnisses von Sensoren, wobei die Sensoren konfiguriert sind zum Messen physikalischer Größen von der elektronischen Vorrichtung, wobei die physikalischen Größen der abhängigen Variablen und den unabhängigen Variablen entsprechen;
    ein Regressionsgleichungs-Erzeugungsmodul (112), das konfiguriert ist zum Extrahieren einer Vielzahl von ersten nichtlinearen Basisfunktionen mit einer hohen Erzeugungswahrscheinlichkeit aus den Unterbibliotheken, wobei die Erzeugungswahrscheinlichkeit eine Wahrscheinlichkeit ist, aus den in derselben Unterbibliothek enthaltenen nichtlinearen Basisfunktionen ausgewählt zu werden, wobei jede der ersten nichtlinearen Basisfunktionen einer der Unterbibliotheken entspricht, zum Erzeugen einer Vielzahl von linearen Regressionsgleichungen, in denen die ersten nichtlinearen Basisfunktionen kombiniert werden, um die abhängige Variable unter Verwendung der Detektion zu berechnen, Koeffizienten der linearen Regressionsgleichungen durch dünnbesetzte Schätzung zu schätzen und Verlustfunktionen der linearen Regressionsgleichungen unter Verwendung eines Ergebnisses der Berechnung zu berechnen, wobei die dünnbesetzte Schätzung die Koeffizienten so schätzt, dass Werte eines Teils der Koeffizienten gemäß einem Ergebnis eines Vergleichs mit einem Hyperparameter der dünnbesetzten Schätzung jeweils Null sind;
    ein Korrekturmodul (113), das konfiguriert ist zum Korrigieren der Erzeugungswahrscheinlichkeiten und des Hyperparameters auf Grundlage der Verlustfunktionen der linearen Regressionsgleichungen, wenn eine vorbestimmte Bedingung nicht erfüllt ist, wobei der Hyperparameter so korrigiert wird, dass ein Wert addiert wird, wenn die Verlustfunktionen unter einen Schwellwert fallen, und ein Wert subtrahiert wird, wenn die Verlustfunktionen gleich dem oder mehr als der Schwellwert sind;
    ein Regressionsgleichungs-Regenerationsmodul (114), das konfiguriert ist zum Extrahieren der ersten nichtlinearen Basisfunktionen auf Grundlage der korrigierten Erzeugungswahrscheinlichkeiten aus den Unterbibliotheken, zum Extrahieren von linearen Regressionsgleichungen, in denen die ersten nichtlinearen Basisfunktionen kombiniert sind, zum Schätzen von Koeffizienten der linearen Regressionsgleichungen durch die dünnbesetzte Schätzung unter Verwendung der korrigierten Hyperparameter, und zum Berechnen von Verlustfunktionen der linearen Regressionsgleichungen; und
    ein Ausgabesteuermodul (115), das konfiguriert ist zum Ausgeben, an eine Ausgabeeinheit (12), einer linearen Regressionsgleichung, die aus den linearen Regressionsgleichungen ausgewählt ist, die durch das Regressionsgleichungs-Erzeugungsmodul oder das Regressionsgleichungs-Regenerationsmodul erzeugt wurden, wenn die Bedingung erfüllt ist, wobei
    die Vielzahl von Arten von Unterbibliotheken zwei oder mehr von einer Wärmeleitungs-Unterbibliothek, einer Strahlungs-Unterbibliothek, einer Erzwungene-Konvektion-Unterbibliothek, einer Natürliche-Konvektion-Unterbibliothek und einer Wärmeerzeugungs-Unterbibliothek enthält; und
    die lineare Regressionsgleichung eine Gleichung ist, die zum Berechnen einer Temperatur der elektronischen Vorrichtung auf Grundlage eines Detektionsergebnisses verwendet wird, das von einem der Sensoren erfasst wird.

2.  Informationsverarbeitungsvorrichtung (1) gemäß Anspruch 1, wobei die unabhängige Variable Variablen enthält, die Geschwindigkeit, Strom und Spannung entsprechen.

3.  Informationsverarbeitungsvorrichtung (1) gemäß Anspruch 1, wobei das Ausgabesteuermodul (115) konfiguriert ist zum Ausgeben von Information über lineare Regressionsgleichungen an die Ausgabeeinheit (12), die gemäß einer Rangordnung auf Grundlage der Verlustfunktionen der linearen Regressionsgleichungen ausgewählt wurden.

# EP 3 996 008 B1

**Revendications**

1. Dispositif de traitement d'information (1) comprenant :

   une unité de stockage de bibliothèque (10) configurée pour stocker une pluralité de types de sous-bibliothèques comprenant des fonctions de base non linéaires respectives basées sur une variable dépendante ou des variables indépendantes, et des probabilités de génération des fonctions de base non linéaires incluses dans les sous-bibliothèques, la variable dépendante étant une température d'un appareil électronique ;
   un module d'acquisition de résultat de détection (111) configuré pour acquérir un résultat de détection de capteurs, dans lequel les capteurs sont configurés pour mesurer des quantités physiques à partir du dispositif électronique, dans lequel les quantités physiques correspondent à la variable dépendante et aux variables indépendantes ;
   un module de génération d'équation de régression (112) configuré pour extraire une pluralité de premières fonctions de base non linéaires ayant une probabilité de génération élevée à partir des sous-bibliothèques, la probabilité de génération étant une probabilité d'être sélectionnée parmi les fonctions de base non linéaires incluses dans une même sous-bibliothèque, chacune des premières fonctions de base non linéaires correspondant à l'une des sous-bibliothèques, générer une pluralité d'équations de régression linéaire, dans lesquelles les premières fonctions de base non linéaires sont combinées, pour calculer la variable dépendante à l'aide du résultat de détection, estimer des coefficients des équations de régression linéaire par estimation clairsemée, et calculer des fonctions de perte des équations de régression linéaire à l'aide d'un résultat du calcul, l'estimation clairsemée estimant les coefficients de telle sorte que les valeurs d'une partie des coefficients soient chacune égales à zéro selon un résultat d'une comparaison avec un hyperparamètre de l'estimation clairsemée ;
   un module de correction (113) configuré pour corriger les probabilités de génération et l'hyperparamètre sur la base des fonctions de perte des équations de régression linéaire lorsqu'une condition prédéterminée n'est pas remplie, l'hyperparamètre étant corrigé de telle sorte qu'une valeur soit ajoutée lorsque les fonctions de perte tombent en dessous d'une valeur seuil et qu'une valeur soit soustraite lorsque les fonctions de perte sont égales ou supérieures à la valeur seuil ;
   un module de régénération d'équation de régression (114) configuré pour extraire les premières fonctions de base non linéaires sur la base des probabilités de génération corrigées à partir des sous-bibliothèques, générer des équations de régression linéaire, dans lesquelles les premières fonctions de base non linéaires sont combinées, estimer des coefficients des équations de régression linéaire par l'estimation clairsemée à l'aide de l'hyperparamètre corrigé, et calculer des fonctions de perte des équations de régression linéaire ; et
   un module de contrôle de sortie (115) configuré pour fournir en sortie, à une unité de sortie (12), une équation de régression linéaire sélectionnée parmi les équations de régression linéaire générées par le module de génération d'équation de régression ou le module de régénération d'équation de régression lorsque la condition est remplie, dans lequel
   la pluralité de types de sous-bibliothèques comprend au moins deux parmi une sous-bibliothèque de conduction thermique, une sous-bibliothèque de rayonnement, une sous-bibliothèque de convection forcée, une sous-bibliothèque de convection naturelle et une sous-bibliothèque de génération de chaleur ; et
   l'équation de régression linéaire est une équation utilisée pour calculer une température de l'appareil électronique, sur la base d'un résultat de détection acquis par l'un des capteurs.

2. Dispositif de traitement d'information (1) selon la revendication 1, dans lequel la variable indépendante comprend des variables correspondant à une vitesse, un courant et une tension.

3. Dispositif de traitement d'information (1) selon la revendication 1, dans lequel le module de contrôle de sortie (115) est configuré pour fournir en sortie à l'unité de sortie (12) des informations sur des équations de régression linéaire sélectionnées selon un ordre de classement basé sur les fonctions de perte des équations de régression linéaire.

# FIG.1

# FIG.2

```
                                          1
┌─────────────────────────────────────────────┐
│ INFORMATION PROCESSING DEVICE                 │
│                                   10          │
│   ┌─────────────────────────────────────┐     │
│   │         STORAGE UNIT                 │     │
│   │                          101         │     │
│   │   ┌─────────────────────────────┐    │     │
│   │   │    LIBRARY INFORMATION      │    │     │
│   │   └─────────────────────────────┘    │     │
│   └─────────────────────────────────────┘     │
│                  ↕              11            │
│   ┌─────────────────────────────────────┐     │
│   │           CONTROLLER                 │     │
│   │                          111         │     │
│   │   ┌─────────────────────────────┐    │     │
│   │   │   DETECTION RESULT          │    │     │
│   │   │   ACQUISITION MODULE        │    │     │
│   │   └─────────────────────────────┘    │     │
│   │                          112         │     │
│   │   ┌─────────────────────────────┐    │     │
│   │   │   REGRESSION EQUATION       │    │     │
│   │   │   GENERATION MODULE         │    │     │
│   │   └─────────────────────────────┘    │     │
│   │                          113         │     │
│   │   ┌─────────────────────────────┐    │     │
│   │   │   CORRECTION MODULE         │    │     │
│   │   └─────────────────────────────┘    │     │
│   │                          114         │     │
│   │   ┌─────────────────────────────┐    │     │
│   │   │   REGRESSION EQUATION       │    │     │
│   │   │   REGENERATION MODULE       │    │     │
│   │   └─────────────────────────────┘    │     │
│   │                          115         │     │
│   │   ┌─────────────────────────────┐    │     │
│   │   │   OUTPUT CONTROL            │    │     │
│   │   │   MODULE                    │    │     │
│   │   └─────────────────────────────┘    │     │
│   └─────────────────────────────────────┘     │
│                  ↕              12            │
│   ┌─────────────────────────────────────┐     │
│   │         OUTPUT UNIT                  │     │
│   └─────────────────────────────────────┘     │
└─────────────────────────────────────────────┘
```

# FIG.3A

| HEAT CONDUCTION SUB-LIBRARY | $[T_i - T_j]$ |
|---|---|
| RADIATION SUB-LIBRARY | $[T_i^4 - T_j^4]$ |
| FORCED CONVECTION SUB-LIBRARY | $\left\{ [\Delta\mathrm{T}_{i-j}\, v^{a1}], [\Delta\mathrm{T}_{i-j}\, v^{a2}], \cdots \right\}$ |
| NATURAL CONVECTION SUB-LIBRARY | $\left\{ \left[ \left( \dfrac{2\lvert\Delta T_{i-j}\rvert}{T_i + T_j} \right)^{b1} \Delta T_{i-j} \right], \left[ \left( \dfrac{2\lvert\Delta T_{i-j}\rvert}{T_i + T_j} \right)^{b2} \Delta T_{i-j} \right], \cdots \right\}$ |
| HEAT GENERATION SUB-LIBRARY | $[i_1 V, i_2 V, \cdots]$ |

# FIG.3B

| SUB-LIBRARY NAME | EXPONENT | GENERATION PROBABILITY |
|---|---|---|
| FORCED CONVECTION SUB-LIBRARY | a1 | 0.3 |
| | a2 | 0.1 |
| | ... | ... |
| NATURAL CONVECTION SUB-LIBRARY | b1 | 0.2 |
| | b2 | 0.35 |
| | ... | ... |
| ... | ... | ... |

# FIG.4

| TIME | Temp1 | Temp2 | Temp3 | Temp4 | Temp5 | v | i1 | i2 | V |
|---|---|---|---|---|---|---|---|---|---|
| s | K | K | K | K | K | m/s | A | A | V |
| 0.0 | 293.0 | 293.0 | 293.0 | 293.0 | 293 | 4.3 | 0.50 | 0.52 | 10.8 |
| 0.5 | 296.7 | 294.9 | 293.1 | 293.0 | 293 | 4.1 | 0.55 | 0.53 | 10.2 |
| 1.0 | 297.5 | 296.6 | 293.2 | 293.1 | 293 | 4.3 | 0.53 | 0.51 | 10.7 |
| 1.5 | 297.8 | 298.1 | 293.3 | 293.2 | 293 | 4.1 | 0.53 | 0.52 | 10.3 |
| 2.0 | 298.0 | 299.4 | 293.4 | 293.3 | 293 | 4.3 | 0.51 | 0.51 | 10.1 |
| 2.5 | 298.2 | 300.6 | 293.5 | 293.4 | 293 | 4.3 | 0.54 | 0.51 | 10.8 |
| 3.0 | 298.4 | 301.6 | 293.7 | 293.6 | 293 | 4.3 | 0.53 | 0.53 | 10.8 |
| 3.5 | 298.6 | 302.5 | 293.8 | 293.7 | 293 | 4.2 | 0.53 | 0.52 | 10.4 |
| 4.0 | 298.8 | 303.4 | 293.9 | 293.9 | 293 | 4.2 | 0.54 | 0.52 | 11.0 |
| 4.5 | 299.0 | 304.1 | 294.0 | 294.1 | 293 | 4.4 | 0.53 | 0.53 | 10.7 |
| 5.0 | 299.2 | 304.8 | 294.1 | 294.2 | 293 | 4.0 | 0.53 | 0.51 | 10.7 |
| 5.5 | 299.3 | 305.4 | 294.3 | 294.4 | 293 | 4.4 | 0.55 | 0.54 | 10.0 |
| 6.0 | 299.5 | 305.9 | 294.4 | 294.6 | 293 | 4.4 | 0.54 | 0.51 | 10.0 |
| 6.5 | 299.6 | 306.4 | 294.5 | 294.8 | 293 | 4.4 | 0.55 | 0.50 | 10.4 |

# FIG.5A

| ITERATIONS (NUMBER OF CORRECTIONS ) | REGRESSION EQUATION No. | LOSS FUNCTION |
|---|---|---|
| 1 | 1 | ○○ |
| 1 | 2 | × × |
| 1 | 3 | △△ |
| 1 | 4 | ○○○ |
| 1 | 5 | × × × |
| 2 | 1 | △△△ |
| 2 | 2 | ○○○○ (FIRST PLACE) |
| 2 | 3 | × × × × (SECOND PLACE) |
| 2 | 4 | △△△△ (THIRD PLACE) |

# FIG.5B

| MODEL RANK ORDER | LOSS FUNCTION | LINEAR REGRESSION EQUATION INFORMATION |
|---|---|---|
| 1 | ○○○○ | ----- |
| 2 | × × × × | ----- |
| 3 | △△△△ | ----- |

# FIG.6

START

↓

ACQUIRE DETECTION RESULT ⟋S1

↓

ARITHMETIC PROCESSING ⟋S2

↓

GENERATE LINEAR
REGRESSION EQUATION AND
ESTIMATE COEFFICIENT ⟋S3

↓

CALCULATE LOSS FUNCTION ⟋S4

↓

WAS
PREDETERMINED
NUMBER OF TIMES
REPEATED? ⟋S5

NO →

CORRECT GENERATION
PROBABILITY AND
HYPERPARAMETER ∼S6

↓

REGENERATE LINEAR
REGRESSION EQUATION AND
ESTIMATE COEFFICIENT ∼S7

↓

CALCULATE LOSS FUNCTION ∼S8

YES ↓

SELECT AND OUTPUT LINEAR
REGRESSION EQUATION ⟋S9

↓

END

## FIG.7A

## FIG.7B

## FIG.7C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KATHLEEN CHAMPION et al.** Data-driven discovery of coordinates and governing equations. *ARXIV.ORG*
- Long-term transient thermal analysis using compact models for data center applications. **SONG ZHI-HANG et al.** INTERNATIONAL JOURNAL OF HEAT AND MASS TRANSFER. ELSEVIER

- **S. L. BRUNTON ; J. L. PROCTOR ; J. N. KUTZ**. Discovering governing equations from data by sparse identification of nonlinear dynamical systems. *Proc. Natl. Acad. Sci.*, 2016, vol. 113, 3932-3937